# EUROPÄISCHE PATENTANMELDUNG

(11) **EP 0 648 948 A1**
(43) Veröffentlichungstag der Anmeldung: **19.04.1995**
(21) Anmeldenummer: 94100904.5
(22) Anmeldetag: 22.01.1994
(51) Int. Cl.: F16C 1/26

(54) **Befestigungseinrichtung für einen Betätigungszug**

(30) Priorität: 17.09.1993 DE 9313485 U
(71) Anmelder: VOFA-WERK XAVIER VORBRÜGGEN GmbH & Co. KG, D-40549 Düsseldorf (DE); Ford-Werke Aktiengesellschaft, D-50725 Köln (DE)
(72) Erfinder: Oberhausen, Anton, D-41844 Wegberg (DE); Kiel, Wolfgang, D-51491 Overath (DE)
(74) Vertreter: Paul, Dieter-Alfred, Dipl.-Ing.

(57) **Zusammenfassung**

Eine Befestigungseinrichtung für einen Betätigungszug mit einem Betätigungsmantel ist an zumindest einem Ende mit einem Anschlußteil versehen, welches in die Öffnung einer Halterung radial und axial unbeweglich eingesetzt ist, wobei die Öffnung im wesentlichen U-Form mit U-Schenkeln hat. Damit die Befestigungseinrichtung einen einfachen Aufbau hat und sich auch an schlecht zugänglichen Stellen ohne Schwierigkeiten in die Halterung einsetzen läßt, haben die U-Schenkel (22, 23) einen solchen Abstand, daß das Anschlußteil (5) radial in die Öffnung (21) einsetzbar ist, und weisen Anschlußteil (5) und U-Schenkel (22, 23) sich im eingesetzten Zustand gegenseitig hinterfassende Rastelemente (18, 19, 26, 27) für die radiale Fixierung des Anschlußteils (5) auf.

## Beschreibung

Die Erfindung betrifft eine Befestigungseinrichtung für einen Betätigungszug mit einem Betätigungsmantel, der an zumindest einem Ende mit einem Anschlußteil versehen ist, welches in die Öffnung einer Halterung radial und axial unbeweglich eingesetzt ist, wobei die Öffnung im wesentlich U-Form mit U-Schenkel hat.

Zur Betätigung von Einrichtungen insbesondere in Kraftfahrzeugen werden in einer Vielzahl von Anwendungsfällen, beispielsweise zur Betätigung von Hauben, Drosselklappen, Getrieben oder dergleichen, sogenannte Betätigungszüge verwendet. Sie weisen jeweils einen flexiblen Betätigungsmantel und eine darin axial gleitend geführte Betätigungsseele - meist in Form eines als Seil oder Litze ausgebildeten Betätigungsdrahtes - auf, wobei die Betätigungsseele der Wegübertragung dient.

In der Regel ist an beiden Enden des Betätigungsmantels ein Anschlußteil angeordnet, über die der Betätigungsmantel über eine Halterung an Bauteilen, beispielsweise an der Karrosserie von Kraftfahrzeugen, festgelegt wird. Der Betätigungsdraht durchläuft die Anschlußteile und steht über diese nach außen vor, wobei er über Endstücke einerends mit dem Betätigungsorgan und anderenends mit dem zu betätigenden Organ verbunden werden kann.

Eine Befestigungseinrichtung der eingangs genannten Art für solche Betätigungszüge ist der EP-0̸ 0̸86 717 B1 zu entnehmen. Die Halterung für das Anschlußteil ist als Blechteil ausgebildet, das eine Öffnung aufweist, in die das Anschlußteil axial eingeschoben werden kann. Dabei fassen die Ränder der Öffnung in eine ringförmige Nut ein. Zusätzlich ist für die axiale Sicherung ein Clip vorgesehen, der in die Aufnahmenut eingesetzt wird.

Die Öffnung der Halterung ist zwar im wesentlichen U-förmig mit U-Schenkeln ausgebildet. Die Endabschnitte der U-Schenkel haben jedoch einen solch geringen Abstand, daß ein Einsetzen des Anschlußteils in radialer Richtung nicht möglich ist.

Die bekannte Befestigungseinrichtung ist relativ aufwendig gestaltet und benötigt zu ihrer Sicherung in axialer Richtung zusätzlich einen Sicherungsclip. Dies kompliziert das Einhängen des Anschlußteils insbesondere dann erheblich, wenn die Halterung an einem nur schwer zugänglichen Ort sitzt.

Der Erfindung liegt deshalb die Aufgabe zugrunde, eine Befestigungseinrichtung bereitzustellen, die einen einfachen Aufbau hat und bei der sich das Anschlußteil auch an schlecht zugänglichen Stellen ohne Schwierigkeiten in die Halterung einsetzen läßt.

Diese Aufgabe wird erfindungsgemäß dadurch gelöst, daß die U-Schenkel einen solchen Abstand haben, daß das Anschlußteil radial in die Öffnung einsetzbar ist, und daß Anschlußteil und U-Schenkel sich im eingesetzten Zustand gegenseitig hinterfassende Rastelemente für die radiale Fixierung des Anschlußteils aufweisen.

Nach der Erfindung läßt diese Ausbildung der Befestigungseinrichtung ein radiales Einschieben des Anschlußteils in die Halterung zu. Dabei schnappen nach Erreichen der Endstellung Rastelemente ineinander ein, die ein Wiederherausrutschen des Anschlußteils sichern. Die axiale Sicherung kann - wenn sie nur in einer Richtung notwendig ist - durch Vorsehen eines Anschlages am Anschlußteil hergestellt werden. Soll die axiale Fixierung in beiden Richtungen gegeben sein, kann dies auf einfache Weise dadurch erreicht werden, daß entweder das Anschlußteil oder die Halterung eine Aufnahmenut aufweisen, in die das jeweils andere Teil einfaßt. Zusätzliche Teile, wie beispielsweise Sicherungsclips oder Gegenmuttern,sind dann nicht erforderlich.

In Ausbildung der Erfindung ist vorgesehen, daß das Anschlußteil V-förmig zueinander stehende Raststege aufweist, die an entsprechend V-förmig verlaufenden Endabschnitten der U-Schenkel anliegen, und daß die Raststege und Endabschnitte mit den Rastelementen versehen sind. Dabei können die Endabschnitte Rastvorsprünge aufweisen, hinter die die Raststege fassen. Vorzugsweise sollten die Rastvorsprünge weiter auseinanderliegen als die U-Schenkel außerhalb der Endabschnitte, damit die Rastvorsprünge das Einschieben des Anschlußteils nicht behindern und erst die Raststege mit den Rastvorsprüngen zusammenwirken. Dabei ist es eine zweckmäßige Lösung, daß die Raststege derart elastisch federnd ausgebildet sind - beispielsweise durch entsprechende Wahl des Materials oder des Querschnittes -, daß sie beim Einsetzen des Anschlußteils in die Öffnung über die Rastvorsprünge fahren und dann wieder zurückspringen.

Die Rastvorsprünge sind vorzugsweise an dem Anschlußteil angeformt, also mit jenen einstückig, und sollten mit dem Außenmantel des Anschlußteils aus einem Kunststoff bestehen, insbesondere einem spritzbaren Kunststoff.

Besonders zweckmäßig ist eine Ausbildung, bei der die Raststege breiter sind als die Dicke der Halterung. Auf diese Weise stehen sie in axialer Richtung über die Halterung vor. Dies läßt es zu, daß sie von Hand oder mittels eines entsprechenden Werkzeuges einander angenähert und damit aus dem Eingriff mit den Rastvorsprüngen herausgeführt werden können. Auf diese Weise kann das Anschlußteil auch wieder aus der Halterung entfernt werden, wenn dies gewünscht ist.

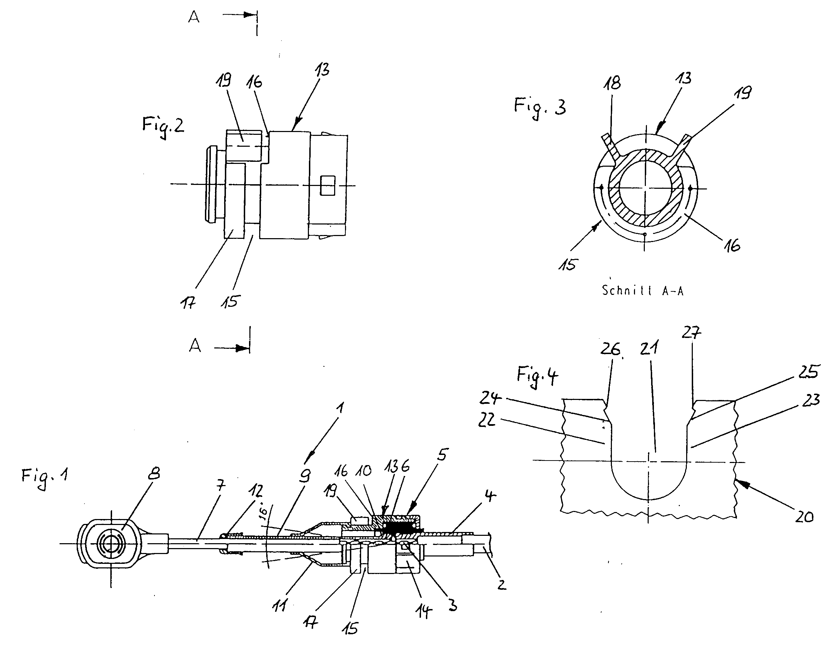

In der Zeichnung ist die Erfindung an Hand eines Ausführungsbeispiels näher veranschaulicht. Es zeigen:
- Figur (1): das Ende eines Betätigungszuges in der Seitenansicht mit Teilschnittdarstellung;
- Figur (2): eine vergrößerte Darstellung der Anschlußhülse des Betätigungszuges gemäß Figur (1) in der Seitenansicht;
- Figur (3): einen Schnitt durch die Anschlußhülse gemäß Figur (2) in der Ebene A-A und
- Figur (4): eine Frontansicht eines Teils einer Halterung für das Anschlußteil gemäß den Figuren (2) und (3).

Der in Figur (1) dargestellte Betätigungszug (1) weist einen Betätigungsmantel (2) auf, in dem ein Betätigungsdraht (3) axial beweglich geführt ist. Der Betätigungsmantel (2) sitzt in einer Metallmuffe (4), die in ein Anschlußteil (5) hineinragt und dort in einem aus Kunststoff bestehenden Kugelpfannenring (6) gehalten ist. Das Anschlußteil (5) entspricht im wesentlichen dem in dem DE-GM 93 0̸6 761.5 dargestellten Anschlußteil.

Der Betätigungsdraht (3) läuft in einem Endteil (7) aus, an dessen Ende ein Kugelpfannenelement (8) angeordnet ist, das zur Befestigung an ein Kugelgelenk bestimmt ist. Das Endteil (7) ist von dem Anschlußteil (5) ausgehend über eine gewisse Strecke von einem Führungsrohr (9) umgeben, dessen anschlußteilseitiges Ende mit einem Kugelgelenkkopf (10̸) versehen ist, der ebenfalls in dem Kugelpfannenring (6) gehalten ist, und zwar derart, daß Auslenkungen um 16° möglich sind. Von dem Anschlußteil (5) geht eine Schutztülle (11) aus, die mit ihrem freien Ende an dem Führungsrohr (9) anliegt und den Innenraum des Anschlußteils (5) vor Verschmutzung schützt. Den gleichen Zweck erfüllt eine weitere Schutztülle (12) am Ende des Führungsrohrs (9).

Das Anschlußteil (5) weist eine mehrfach gestufte Anschlußhülse (13) auf, in die der Kugelpfannenring (6) eingelassen ist. Eine mit der Anschlußhülse (13) verbundene Kappe (14) schließt den Kugelpfannenring (6) ein und sorgt für dessen axiale Fixierung innerhalb der Anschlußhülse (13).

Wie sich insbesondere aus den Figuren (2) und (3) ergibt, weist die Anschlußhülse (13) in dem dem Endteil (7) benachbarten Bereich eine Aufnahmenut (15) auf. Die Aufnahmenut (15) wird in axialer Richtung einerseits von einem Ringabsatz (16) und andererseits von einem Ringsteg (17) begrenzt. Der Ringsteg (17) und damit auch die Aufnahmenut (15) erstrecken sich über ca. 270̸°. In dem Winkelbereich, in dem kein Ringsteg (17) vorhanden ist, stehen zwei Raststege (18, 19) im wesentlichen radial nach außen und V-förmig zueinander vor, wie dies insbesondere aus Figur (3) zu ersehen ist. Die Raststege (18, 19) haben in axialer Richtung der Anschlußhülse (13) eine sich über die Breite der Aufnahmenut (15) und die des Ringsteges (17) gehende Breite. Zusätzlich ist der Ringabsatz (16) in dem Bereich außerhalb der Aufnahmenut (15) soweit zurückgenommen, daß ein Abstand zwischen den Raststegen (18, 19) und dem Ringabsatz (16) vorhanden ist.

In Figur (4) ist ein Teil einer Halterung (20̸) für das Anschlußteil (5) dargestellt. Es handelt sich um ein Blechteil, das - was hier nicht näher dargestellt ist - an einer beliebigen Stelle, beispielsweise an der Karrosserie eines Fahrzeuges, angebracht werden kann. Die Halterung (20̸) hat eine Dicke - senkrecht zur Zeichnungsebene -, die nur wenig geringer ist als die Breite der Aufnahmenut (15) der Anschlußhülse (13).

Die Halterung (20̸) hat eine U-förmige Öffnung (21), die zu beiden Seiten durch U-Schenkel (22, 23) begrenzt wird. Der Radius des unteren Teils der Öffnung (21) entspricht im wesentlichen dem Radius des Bodens der Aufnahmenut (15). Die U-Schenkel (22, 23) laufen nach oben in schräg nach außen gerichteten Endabschnitte (24, 25) aus, die von den senkrecht verlaufenden Abschnitten der U-Schenkel (22, 23) abgewinkelt sind. Der Winkel der Endabschnitte (24, 25) zueinander entspricht im wesentlichen dem V-Winkel der Raststege (18, 19) an der Anschlußhülse (13). Die Endabschnitte (24, 25) haben Rastvorsprünge (26, 27), die rechtwinklig von den Endabschnitten (24, 25) vorstehen. Von den Rastvorsprüngen (26, 27) gehen wiederum schräg nach außen verlaufende Abschnitte ab.

Das Anschlußteil (5) wird in die Halterung (20̸) eingesetzt, indem das Anschlußteil (5) radial, d.h. seitlich in die Öffnung (21) in der Weise eingeschoben wird, daß der Rand der Öffnung (21) innerhalb der Aufnahmenut (15) zu liegen kommt, also auf der einen Seite von dem Ringsteg (17) und auf der anderen Seite von dem Ringabsatz (16) eingefaßt wird. Dies geht so weit ohne Behinderung, bis die Raststege (18, 19) am oberen Rand der Halterung (20̸) vor den Rastvorsprüngen (26, 27) anstoßen. Für ein weiteres Einschieben des Anschlußteils (5) müssen dann die Raststege (18, 19) ein wenig gegeneinander federn, um an den Rastvorsprüngen (26, 27) vorbeizufahren. Der hierfür notwendige Kraftaufwand ist so bemessen, daR dies noch von Hand geschehen kann. Nach dem Überfahren der Rastvorsprünge (26, 27) springen die Raststege (18, 19) zurück und kommen dabei an den schräg verlaufenden Endabschnitten (24, 25) zur Anlage. Die Rastvorsprünge (26, 27) verhindern dann ein selbsttätiges Herausbewegen des Anschlußteils (5) aus der Halterung (20̸).

Der Durchmesser des Bodens der Aufnahmenut (15), der Radius des unteren Teils der Öffnung (21) und die Anordnung der Rastvorsprünge (26, 27) sind so bemessen, daß das Anschlußteil (5) in radialer Richtung nahezu kein Spiel hat. Entsprechendes gilt für die Dicke der Halterung (20̸) und die Breite der Aufnahmenut (5). Zudem ist der Verlauf der Endabschnitte (24, 25) und der der Raststege (18, 19) so aufeinander abgestimmt, daß auch in Umfangsrichtung praktisch kein Spiel vorhanden ist.

## Patentansprüche

1. Befestigungseinrichtung für einen Betätigungszug mit einem Betätigungsmantel, der an zumindest einem Ende mit einem Anschlußteil versehen ist, welches in die Öffnung einer Halterung radial und axial unbeweglich eingesetzt ist, wobei die Öffnung im wesentlichen U-Form mit U-Schenkeln hat, dadurch gekennzeichnet, daß die U-Schenkel (22, 23) einen solchen Abstand haben, daß das Anschlußteil (5) radial in die Öffnung (21) einsetzbar ist, und daß Anschlußteil (5) und U-Schenkel (22, 23) sich im eingesetzten Zustand gegenseitig hinterfassende Rastelemente (18, 19, 26, 27) für die radiale Fixierung des Anschlußteils (5) aufweisen.

2. Befestigungseinrichtung nach Anspruch 1,
dadurch gekennzeichnet, daß das Anschlußteil (5) V-förmig zueinander stehende Raststege (18, 19) aufweist, die an entsprechend V-förmig verlaufenden Endabschnitten (24, 25) der U-Schenkel (22, 23) anliegen, und daß die Raststege (18, 19) und die Endabschntte (24, 25) mit den Rastelementen (26, 27) versehen sind.

3. Befestigungseinrichtung nach Anspruch 2,
dadurch gekennzeichnet, daß die Endabschnitte (24, 25) Rastvorsprünge (26, 27) aufweisen, hinter die die Raststege (18, 19) fassen.

4. Befestigungseinrichtung nach Anspruch 2 oder 3,
dadurch gekennzeichnet, daß die Rastvorsprünge (26, 27) weiter auseinanderliegen als die U-Schenkel außerhalb der Endabschnitte (24, 25).

5. Befestigungseinrichtung nach einem der Ansprüche 2 bis 4,
dadurch gekennzeichnet, daß die Raststege (18, 19) derart elastisch federnd ausgebildet sind, daß sie beim Einsetzen des Anschlußteils (5) in die Öffnung (21) über die Rastvorsprünge (26, 27) fahren.

6. Befestigungseinrichtung nach einem der Ansprüche 2 bis 5,
dadurch gekennzeichnet, daR die Raststege (18, 19) an dem Anschlußteil (5) angeformt sind und mit dem Außenmantel (13) des Anschlußteils (5) aus einem Kunststoff bestehen.

7. Befestigungseinrichtung nach einem der Ansprüche 2 bis 6,
dadurch gekennzeichnet, daß die Raststege (18, 19) breiter sind als die Dicke der Halterung (20̸).

8. Befestigungseinrichtung nach einem der Ansprüche 1 bis 7,
dadurch gekennzeichnet, daß das Anschlußteil (5) eine Aufnahmenut (15) aufweist, in die Halterung (20̸) einfaßt.
